(19) Europäisches Patentamt / European Patent Office / Office européen des brevets

(11) **EP 3 840 454 B1**

(12) **EUROPEAN PATENT SPECIFICATION**

(45) Date of publication and mention
of the grant of the patent:
**09.08.2023  Bulletin 2023/32**

(21) Application number: **19216947.2**

(22) Date of filing: **17.12.2019**

(51) International Patent Classification (IPC):
**H04W 24/02** *(2009.01)*     **H04W 52/02** *(2009.01)*
**H04W 56/00** *(2009.01)*     **H04W 88/16** *(2009.01)*

(52) Cooperative Patent Classification (CPC):
**H04W 24/02; H04W 52/0203; H04W 56/001;**
H04W 88/16; Y02D 30/70

(54) **COMPUTER-IMPLEMENTED METHOD AND PRODUCT FOR DETERMINING A GATEWAY BEACON TRANSMISSION SCHEME IN A LOW POWER WIDE AREA NETWORK**

COMPUTERIMPLEMENTIERTES VERFAHREN UND PRODUKT ZUR BESTIMMUNG EINES GATEWAY-BAKEN-ÜBERTRAGUNGSSCHEMAS IN EINEM WEITBEREICHSNETZWERK MIT NIEDRIGER LEISTUNGSAUFNAHME

PROCÉDÉ MIS EN ŒUVRE PAR ORDINATEUR ET PRODUIT POUR DÉTERMINER UN SCHÉMA DE TRANSMISSION DE BALISE DE PASSERELLE DANS UN RÉSEAU ÉTENDU DE FAIBLE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.06.2021  Bulletin 2021/25**

(73) Proprietor: **Koninklijke KPN N.V.**
**3072 AP Rotterdam (NL)**

(72) Inventor: **Arora, Apoorva**
**2611 GX Delft (NL)**

(74) Representative: **Wuyts, Koenraad Maria**
**Koninklijke KPN N.V.**
**Intellectual Property Group**
**P.O. Box 25110**
**3001 HC Rotterdam (NL)**

(56) References cited:
**US-A1- 2019 053 180**

- **REYNDERS BRECHT ET AL: "Improving Reliability and Scalability of LoRaWANs Through Lightweight Scheduling", IEEE INTERNET OF THINGS JOURNAL, IEEE, USA, vol. 5, no. 3, 1 June 2018 (2018-06-01), pages 1830-1842, XP011685086, DOI: 10.1109/JIOT.2018.2815150 [retrieved on 2018-06-08]**
- **FINNEGAN JOSEPH ET AL: "Evaluating the Scalability of LoRa WanGateways for Class B Communication in ns-3", 2018 IEEE CONFERENCE ON STANDARDS FOR COMMUNICATIONS AND NETWORKING (CSCN), IEEE, 29 October 2018 (2018-10-29), pages 1-6, XP033480427, DOI: 10.1109/CSCN.2018.8581759 [retrieved on 2018-12-19]**

Description

**FIELD OF THE INVENTION**

This disclosure relates to a computer-implemented method for determining a gateway beacon transmission scheme in a low power wide area network, such as a LoRaWAN network. The disclosure also relates to a computer program product configured for performing this method.

**BACKGROUND**

Over the past few years, network technologies have been developed to efficiently connect large numbers of end devices (e.g. sensors and actuators) to the internet to obtain what is often referred to as the internet of things (IoT). These network technologies include low power wide area networks wherein gateway devices provide a wireless interface for these end devices to the network(s) behind the gateway devices. Examples of these network technologies include LoRaWAN (Long Range Wide Area Network), an open specification managed by the LoRa Alliance, but also Sigfox and Symphony Link.

For these low power wide area networks, a plurality of technical constraints apply.

For example, LoRa transmissions are on the unlicensed radio spectrum in the Industrial, Scientific and Medical (ISM) band which is subject to duty cycle and power regulations. In Europe, LoRaWAN operates in the EU433 band (433.05 - 434.79 MHz) and in the EU863-870 band (863 - 870 MHz). Duty cycle limitations and transmit power regulations in such systems apply to gateway devices and end devices alike.

LoRaWAN distinguishes three modes of operation, commonly referred to as Class A, Class B and Class C, enabling different IoT use cases because of variations in downlink latency and energy consumption. The classes differ in how frequently the end device may open downlink reception windows to receive transmissions from the gateway devices. End devices in Class A mode are most energy efficient, but have high latencies for the downlink, whereas end devices in Class C mode have virtually no downlink latency but consume considerable amounts of energy.

End devices operating in Class B mode provide a balanced mode regarding latency and energy consumption by periodically opening reception time windows in addition to two reception time windows following an uplink transmission, the latter being a Class A mode characteristic. During these reception time windows, the end devices are able to receive data (commonly referred to as 'pings') over the radio interface from the gateway devices. In order to make sure that transmissions from the network are actually received by the end devices, a synchronization mechanism is implemented to time align the transmissions from the network with the reception time windows at the end devices.

The synchronization process operating in LoRaWAN networks involves the transmission of beacon signals from the gateway devices towards the end devices. Beacon signals are time-synchronized packets transmitted from the gateway devices and received by the end devices periodically, e.g. every 128 seconds. The beacon signal includes information such as GPS time, gateway identification information and an error detection code enabling the end device to verify whether the beacon signal information is correctly received. The end device randomly determines the reception time windows for data with respect to the time information in the beacon. Reception time windows for receiving beacon signals are separate from the reception time windows for data.

The reception of beacon signals is relevant for end devices operating in Class B mode. End devices in Class B mode remain in this mode for a predetermined period of time (up to 2 hours in LoRa WAN) if no beacon signal is received and then fall back into Class A mode. During this period, the reception windows for receiving the beacon signals widen gradually, resulting in a higher energy consumption by the end device.

Therefore, beacon transmission needs to be efficient and effective, both from the network perspective and from the end device perspective. Transmission of large numbers of beacon signals is inefficient from a network perspective, while sending too few beacon signals is inadequate for the energy consumption of the end devices.

Hence, a need exists for determining a gateway beacon transmission scheme that takes these effects into account.

REYNDERS Brecht et al. "Improving Reliability and Scalability of LoRaWANs Through Lightweight Scheduling", IEEE Internet of Things Journal, IEEE, USA, vol. 5, no. 3, 1 June 2018, pages 1830-1842, proposes a new MAC layer-RS-LoRa-to improve reliability and scalability of LoRa wide-area networks (LoRaWANs). The key innovation is a two-step lightweight scheduling: 1) a gateway schedules nodes in a coarse-grained manner through dynamically specifying the allowed transmission powers and SFs on each channel and 2) based on the coarse-grained scheduling information, a node determines its own transmission power, SF, and when and on which channel to transmit. Through the proposed lightweight scheduling, nodes are divided into different groups, and within each group, nodes use similar transmission power to alleviate the capture effect.

FINNEGAN Joseph et al. "Evaluating the Scalability of LoRa WanGateways for Class B Communication in ns-3", 2018 IEEE Conference on Standards for Communications and Networking (CSCN), IEEE, 29 October 2018, pages 1-6, models Class B of LoRaWAN in ns-3 to explore the limits of scale at which this form of bi-directional communication remains feasible in large networks. The simulation results show that the principle restriction on scalability is caused by the duty cycle limits that the gateway must adhere to.

US 2019/0053180 A1 discloses a method for synchronising a first gateway of a LoRa network, intended to enable the first gateway to function according to the class B communication mode of the LoRaWAN protocol. The method relies on at least one reception of a synchronisation frame by the first gateway, each synchronisation frame having been transmitted by a second class B gateway in the LoRa network, equipped with synchronisation means and designated by a server. The first gateway uses an instant of reception of each synchronisation frame that it receives in order to synchronise beacon transmissions used in the implementation of the class B communication mode with beacon transmissions made by other class B gateways in the LoRa network.

## SUMMARY

One aspect of the present disclosure relates to a computer-implemented method for determining or analyzing a gateway beacon transmission scheme in a low power wide area network, such as a LoRaWAN network. The network comprises a plurality of gateway devices and a plurality of end devices. Each of the end devices is configured for wirelessly receiving a broadcast beacon signal from one or more of the gateway devices in the network for synchronizing time windows of the end devices for data reception from the gateway devices.

In order to assess the gateway beacon transmission scheme, the method includes a step of selecting at least one gateway device from the plurality of gateway devices in the network as a beacon transmitting gateway device. Starting from the selected at least one beacon transmitting gateway device, one or more neighbor gateway devices are determined that are located within a distance from the selected beacon transmitting gateway device, i.e. gateway devices that are close to the selected beacon transmitting device. The distance may be a predetermined distance. The distance may be selected on the basis of the downlink transmission range from the at least one beacon transmitting gateway device and a safety margin may be applied to substantially guarantee that downlink transmissions from the beacon transmitting gateway device are received by end devices. In one example, the distance may be less than 20 kilometers, preferably less than 10 kilometers, e.g. 7.5 kilometers. The next determination step includes the deactivation with respect to transmitting beacon signals for the neighbor gateway devices.

Determination of a gateway beacon transmission scheme is now performed by executing a network performance function for the obtained system of the at least one beacon transmitting gateway device and deactivated gateway devices. Once the network performance function has been executed, a new permutation of selected beacon transmitting gateway devices and deactivated gateway devices may be tested in order to determine the gateway beacon transmission scheme. In one example, one or more neighbor gateway devices may now be selected as beacon transmitting gateway devices and one or more previously selected beacon transmitting gateway devices may now be deactivated neighbor gateway devices. Repeatedly selecting beacon transmitting gateway devices and deactivating other gateway devices that are close to the selected beacon transmitting gateway device(s), provides for the dynamic formation of regions (DRF) from each of which regions only one gateway device is selected to transmit beacon signals for end devices. Results of the network performance functions can be analyzed to select an appropriate gateway beacon transmission scheme.

The network performance function is executed for a network with the at least one selected beacon transmission gateway device and the neighbor gateway devices for which the beacon transmission is deactivated to obtain a first network performance result. As a next step, at least one beacon transmitting gateway device is selected that is different from the at least one beacon transmitting gateway device selected for obtaining the first network performance result. For the new system, the network performance function is executed to obtain a second network performance result. The gateway beacon transmission scheme of beacon transmitting gateway devices in the system is determined based on a comparison of at least the first network performance result and the second network performance result. In an example, the gateway beacon transmission scheme resulting in the best network performance result from the obtain network performance results is determined to be the most appropriate system. It should be appreciated that alternative ways may be applied to determine the optimal gateway beacon transmission scheme from one or more network performance functions or network performance results.

Other aspects of the present disclosure pertain to a computer program product as disclosed herein.

The inventor envisages that the method and product are suitable for planning beacon transmissions in a low power wide area network. An important aspect for IoT systems is to enable scaling of the network to accommodate more end devices or groups, such as multicast groups, of end devices. As the network scales in terms of the number of end devices, while the number of gateway devices remains substantially constant, the air time of gateway devices (which is a constraint often encountered in these networks) is expected to increase since more downlink transmissions can be expected. In this scenario, appropriate planning of the airtime of gateways becomes even more essential to prevent delays.

In one embodiment, the beacon transmitting gateway devices may be determined to transmit beacon signals at predetermined times and the beacon transmitting gateway devices are associated with a probability P< 1 of transmitting the beacon signal at the predetermined times, preferably 0.5<P<1. Hence, in addition to the gateway devices which are deactivated by virtue of being close to the selected beacon transmitting gateway device, a selected beacon transmitting gateway device may also be deactivated for one or more of said predetermined beacon transmission times (beacon periods) because of the beacon transmitting probability associated with it. By randomizing beacon transmission from gateway devices, selected beacon transmitting gateway devices do not participate in a beacon round systematically such that systematic collision of beacon signals can be reduced.

In one example, it may be determined for the gateway device whether or not it transmits a beacon signal at a given time by implementing a randomization algorithm. For example, the beacon transmitting gateway device may generate a random number and compare it with a set probability. In one other example, the at least one selected beacon transmitting gateway device may be instructed from an external source whether or not to transmit a beacon signal.

In one embodiment, the selected beacon transmitting gateway devices may be determined to transmit a beacon signal or not for a particular beacon round and the network performance function is executed for at least two of said beacon rounds. The embodiment is beneficial for obtaining a more accurate and reliable network performance result by analyzing the performance for more than one round of beacon transmissions, especially since beacon signals may be transmitted from selected beacon transmitting gateway devices in one round and not in another round because of assigning a probability associated with a selected beacon transmitting gateway device to transmit a beacon signal for a particular beacon round as mentioned above.

In one embodiment, the distance for determining the neighbor gateway devices may be customizable per selected beacon transmitting gateway device. The embodiment enables taking into account that not all gateway devices are identical with regard to the communication range. The range can be dependent on the configuration and/or environment of the gateway device, e.g. the antenna configuration, location, etc. Taking the different communication ranges into account delivers a more accurate network performance result reflecting the actual network in operation.

In one embodiment, the execution of the network performance function may include a simulation process of a beacon transmission process in the network with the at least selected beacon transmitting gateway devices and the deactivated neighbor devices, wherein the simulation process may entail at least one sub-process of downlink data receiving by the end devices, one sub-process of beacon collision at the end devices and/or one sub-process of duty cycle limitations for the gateway devices and/or the end devices. In this manner, the network performance result may take practical constraints in a low power wide area network into account.

The sub-process of the end devices taking downlink data reception into account assumes that end devices open up periodic time windows for receiving data from the server and the server using some of these time windows (e.g. a particular percentage) to send data to the end device using the best gateway device. The best gateway device for transmitting the downlink data is the gateway device receiving the latest uplink transmission from the end device with maximum strength.

The sub-process of beacon collision takes into account that end devices may receive beacon signals from more than one gateway device with similar power so that effectively no beacon can be detected by the end device. This process is activated for every end device at the start of the simulation and checks every beacon round if a beacon signal is received or not.

The simulation model may also take into account that both gateway devices and/or end devices are only allowed to transmit during a limited period of time, referred to as duty cycle, as a result of transmission regulations on public frequencies.

In one embodiment, the network performance function may contain components associated with at least one of beaconless operation period for the end devices and the number of beacons received by the end devices from the at least one selected beacon transmitting gateway device. The inventor has found that in particular these components of the network performance function are relevant and, accordingly may be associated with a relatively large weight factor in the network performance function. In particular, beaconless operation is a negative factor for energy consumption of the end device and may have a detrimental effect on the network performance result. On the other hand, the number of beacons received is a positive factor for the end device, because receiving a beacon signal frequently limits the width of the beacon receiving window at the end device, thereby reducing energy consumption.

In yet another embodiment, the network performance function may also contain components associated with the total number of beacon signal collisions at the end devices, the total number of no beacon signal received events at the end devices and/or the total number of beacon signals sent in the network. The inventor has identified the components to be relevant for the network. The network performance functions may associate individual (negative) weights with each of these components. In one embodiment, the total number of beacon signal collision events is given a higher negative weight than the total number of no beacon signal received events. The total number of beacon signals transmitted in the network may be given the lowest negative weight. Beacon collisions may be determined to have the most negative effect because such collisions may result in no beacon reception at an end device (i.e. disadvantageous for the energy consumption at the end device) as well as be disadvantageous for the energy and downlink airtime consumption of the gateway devices. When end devices just receive no beacon for another reason, this may be due to an outage of a gateway device or because a gateway device in the neighborhood of the end device has been deactivated. Such no beacon reception events are slightly better than beacon collisions since no network resources are consumed for such events.

In one embodiment, the low power wide area network is a LoRaWAN network in accordance with the LoRaWAN specification, e.g. the LoRaWAN 1.0.3 specification of July 2018. In addition or alternatively, one or more of the end devices are operating as Class B LoRaWAN devices. The inventor has found that the dynamic formation of regions works particularly well for LoRaWAN systems. Class B LoRAWAN devices are a suitable choice for IoT multicast applications, such as for firmware-over-the-air (FOTA) updates for remote reconfiguration, updating or repurposing of end devices.

In one embodiment, the comparison of the network performance results may be used for automatically controlling the network to implement the gateway beacon transmission scheme in the network.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the methods described herein, as well as a non-transitory computer readable storage-medium storing the computer program are provided. A computer program may, for example, be downloaded (updated) to the remote space access key distribution system and/or to the space access control module or be stored upon manufacturing of the device.

Elements and aspects discussed for or in relation with a particular embodiment may be suitably combined with elements and aspects of other embodiments, unless explicitly stated otherwise. Embodiments of the present invention will be further illustrated with reference to the attached drawings, which schematically will show embodiments according to the invention. It will be understood that the present invention is not in any way restricted to these specific embodiments.

The invention is set out in the appended set of claims.

## BRIEF DESCRIPTION OF THE DRAWINGS

Aspects of the invention will be explained in greater detail by reference to exemplary embodiments shown in the drawings, in which:

FIG. 1 is a schematic illustration of an exemplary low power wide area network comprising a plurality of gateway devices and end devices;

FIGS. 2A and 2B schematically illustrate selection of beacon transmitting gateway devices and deactivated gateway devices;

FIG. 3 is a flow chart illustrating steps of a computer-implemented method to determine a gateway beacon transmission scheme according to an embodiment of the present disclosure;

FIG. 4 is a schematic illustration of a LoRaWAN network infrastructure comprising gateway devices and end devices connected to a server infrastructure;

FIGS. 5A and 5B illustrate transmissions between a gateway and an end device in the LoRaWAN infrastructure according to FIG. 4;

FIGS. 6A and 6B are diagrams resulting from a simulation of a LoRaWAN network comprising a plurality of gateway devices and end devices; and

FIG. 7 depicts a processing system according to an embodiment for performing simulations and/or controlling a network system for beacon transmissions. In the following the invention is described with reference to figure 3, while the description of the remaining figures is provided for illustrative purposes for a better understanding of the invention.

## DETAILED DESCRIPTION OF THE DRAWINGS

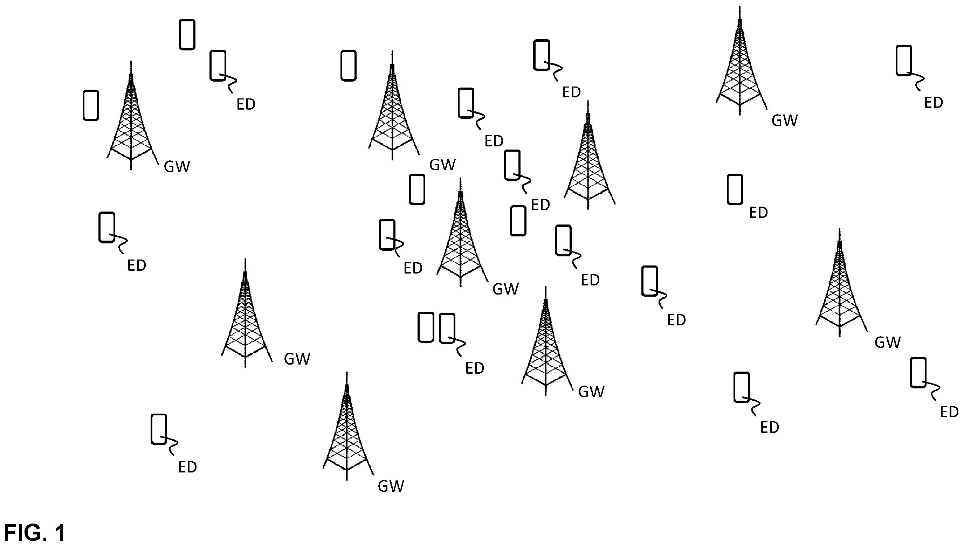

FIG. 1 is a schematic illustration of an exemplary low power wide area network 1 comprising a plurality of gateway devices GW, schematically depicted as radio towers in FIG. 1, and end devices ED distributed over an area covered by the gateway devices GW. Generally, the number of end devices ED will be much larger than the number of gateway devices GW. An example of a network technology applied in such wide area networks includes LoRaWAN (Long Range Wide Area Network), an open specification managed by the LoRa Alliance that will be described in further detail below. Other examples include Sigfox and Symphony Link. Sigfox networks may have a mode of operation for controlled downlink or server initiated downlink similar to Class B operation of LoRaWAN using beacon signals. Symphony link networks do not have duty cycle restrictions but may benefit from beacon signals to end devices.

Low power wide area networks are typically employed to provide IoT services. In such a network, normally the gateway devices GW are connected to an application server via a network server controlling communications between the application server and the gateway devices GW. The application server and network server are not shown in FIG. 1. In such an IoT system, the end devices ED may be sensors, actuators, etc. Such end devices may e.g. be used for smart metering and temperature monitoring. Some of these end devices ED are available for communication with the gateway devices GW during particular periods of time, e.g. at periodic time intervals when communication reception windows are open in the end devices ED.

The gateway devices GW provide a radiofrequency interface between the network server and the end devices ED. The gateway devices GW forward uplink packets from the end devices ED to the network server and transmit downlink packets to the end devices ED.

In some systems and for some applications, end devices ED require to receive a beacon signal from a gateway device GW to synchronize reception windows of the end devices ED with transmissions from or via the gateway device(s) GW. To that end, the gateway devices GW may transmit beacon signals. The transmission of beacon signals should be conducted with care since transmitting too many beacon signals is not efficient for a network and transmitting too few beacon signals is not effective for the end devices in terms of receiving beacon signals and/or energy consumption.

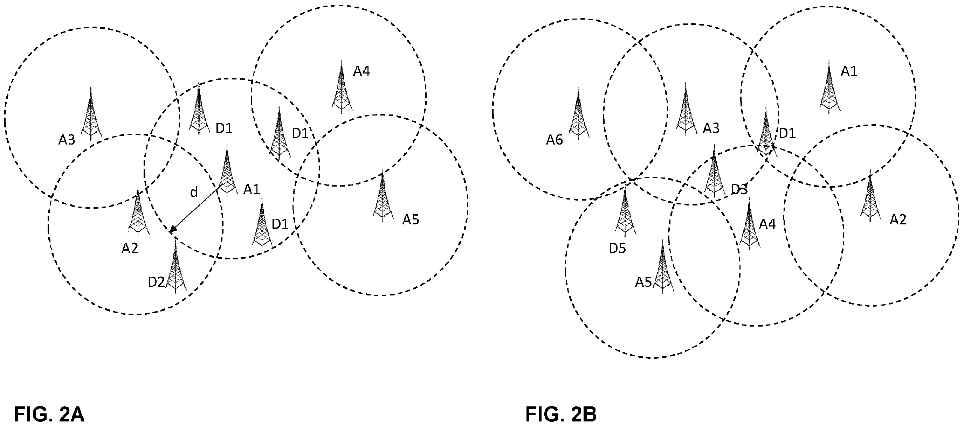

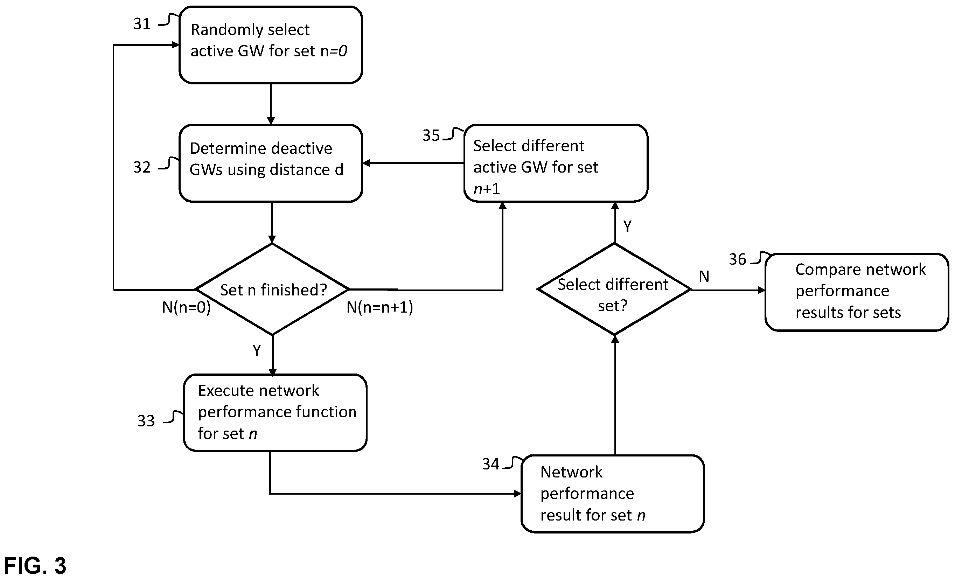

An embodiment of a computer-implemented method for determining an improved beacon transmission scheme will now be described with reference to FIGS. 2A, 2B and 3.

FIG. 2A is a copy of the arrangement of gateway devices GW as shown in FIG. 1. The gateway devices GW are indicated by letters A, D indicating the status of the gateway devices GW in a beacon transmission simulation process for determining a beacon transmission scheme as set out in FIG. 3. It is assumed that the geographical positions of the gateway devices GW in the network are known for purposes of the simulation process.

In a first step 31, a gateway device GW in the network is randomly selected from the plurality of gateway devices GW in the network of FIG. 1. This gateway device is determined to be a beacon transmitting gateway device indicated by 'A1' in FIG. 2A. The letter 'A' stands for 'Active'.

In a next step 32, gateway devices GW in the network within a distance d, indicated by the dashed circle, around the beacon transmitting gateway device A1 are determined as shown in FIG. 2A. These gateway devices that are close to the beacon transmitting gateway device A1 are deactivated for beacon transmission for the simulation and therefore indicated by D1 in FIG. 2A. It should be noted that the deactivated gateway devices D1 are only deactivated for beacon transmissions in the simulation process but remain available for transmitting data to or receiving data from the end devices ED.

Steps 31 and 32 are repeated (N(n=0)) until the gateway devices GW in the (relevant part of the) network have been activated as beacon transmitting gateway devices or have been deactivated as beacon transmitting gateway devices (Y). In FIG. 2A, for example, the next randomly selected gateway device outside the defined area for gateway device A1 may be the gateway device indicated by A2. That gateway device is selected as a beacon transmitting gateway device in step 31 and the gateway device indicated as D2 is deactivated as a beacon transmitting gateway device by virtue of a distance criterion applying to this beacon transmitting gateway device A2. It should be noted that the distance for determining the neighbor gateway devices may be customizable per selected beacon transmitting gateway device A1, A2. Customization of the distance within which gateway devices GW are deactivated enables taking into account that not all gateway devices A1, A2 need to be identical with regard to the communication range. The range can be dependent on the configuration and/or environment of the gateway device A1, A2, e.g. the antenna configuration, location, etc. In FIGS. 2A and 2B, the distance d has been assumed to be the same for all gateway devices GW.

Similar activation steps 31 result in the selection of gateway devices A3, A4 and A5 in the network of FIG. 2A. Similar deactivation steps 32 are taken for these gateway devices, but since no gateway devices GW are located within the distance d, no further gateway devices GW are determined to inactive for beacon transmission purposes. It should be noted that one gateway device D1 is in the dashed circle of gateway device A4, but since this gateway device was already deactivated when executing step 32 with regard to gateway device A1, this gateway device D1 does not need to be deactivated once again.

When all gateway devices GW in the area of interest have been determined as either activated or deactivated for beacon transmission, a set n=0 of activated and deactivated gateway devices GW for beacon transmission has been established.

Then, in step 33, a network performance function is executed for the network for a set n with the selected activated beacon transmitting gateway devices A and deactivated beacon transmitting gateway devices D. In the network performance function, it is considered for the arrangement of activated and deactivated gateway devices A, D how many beacon signals need to be transmitted for the end devices to receive sufficient beacon signals to stay in sync with transmissions from or via the gateway devices A, D and/or not waste energy by opening receiving windows for too long a time.

In step 34, execution of the network performance function delivers a network performance result for the set n of gateway devices under consideration. This performance may be evaluated by comparing the result with a required result or minimum performance result or some other measure (not shown in FIG. 3A). The network performance function may be executed several times, for example when also a probability P is assigned to the activated gateway devices A that a beacon transmission is transmitted at a particular point in time. Several rounds of execution of the network performance function may be performed.

In step 35, a different gateway device GW may be selected as a beacon transmitting gateway device GW for creating a new set n+1 with a different arrangement of activated and deactivated gateway devices GW. An example of such an arrangement of gateway devices is shown in FIG. 2B. In step 35, first gateway device A1 is selected and in step 32 gateway device D1 is deactivated for beacon transmissions by virtue of the distance criterium applicable for gateway device A1. In the same loop gateway devices A2-A6 are activated for beacon transmissions and gateway devices D3 and D5 are deactivated for beacon transmissions.

When set n+1 is complete, the network performance function is executed for this set in step 33 to obtain a network performance function result for this set in step 34.

Multiple simulations for different arrangements of activated and deactivated gateway devices (i.e. different sets) may be conducted resulting in corresponding network performance results.

In step 36, the network performance results are compared to obtain the best or optimum scheme for beacon transmissions for the gateway devices. This comparison may be used to automatically control which of the gateway devices in the actual low power wide area network of FIG. 1 are most suitable for transmitting beacon signals.

A practical application of the disclosed simulation method will now be described in more detail for a LoRaWAN network. LoRaWAN is MAC layer protocol defining the communication between gateway devices and end devices above the LoRa physical layer.

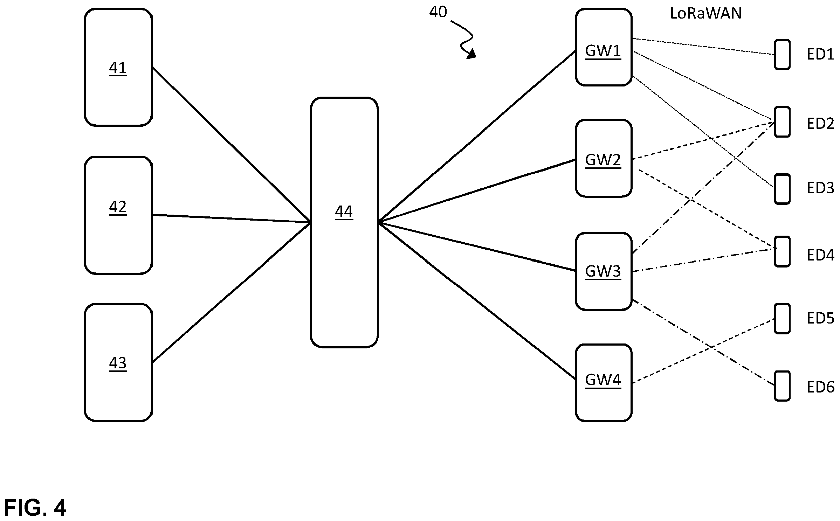

FIG. 4 is a schematic illustration of a network 40 comprising several application servers 41-43 providing cloud IoT services behind a network server system 44 in connection with a plurality of gateway devices GW1-GW4 that communicate wirelessly with a plurality of end devices ED1-ED6 over a LoRaWAN network.

End devices ED1-ED6 are assumed to represent devices that operate or at least are able to operate in Class B mode as specified in the LoRaWAN specifications. End devices operating in Class B mode provide a balanced mode regarding latency and energy consumption by periodically opening reception time windows for downlink transmissions from gateway devices GW1-GW4 in addition to two reception time windows following an uplink transmission to the gate devices GW1-GW4. During these reception time windows, the end devices ED1-ED6 are able to receive data (commonly referred to as 'pings') over the radio interface from the gateway devices GW1-GW4. In order to make sure that transmissions from the network are actually received by the end devices ED1-ED6, a synchronization mechanism is implemented to time align the transmissions from the network with the reception time windows at the end devices ED6 as described more generally with respect to FIGS. 1-3.

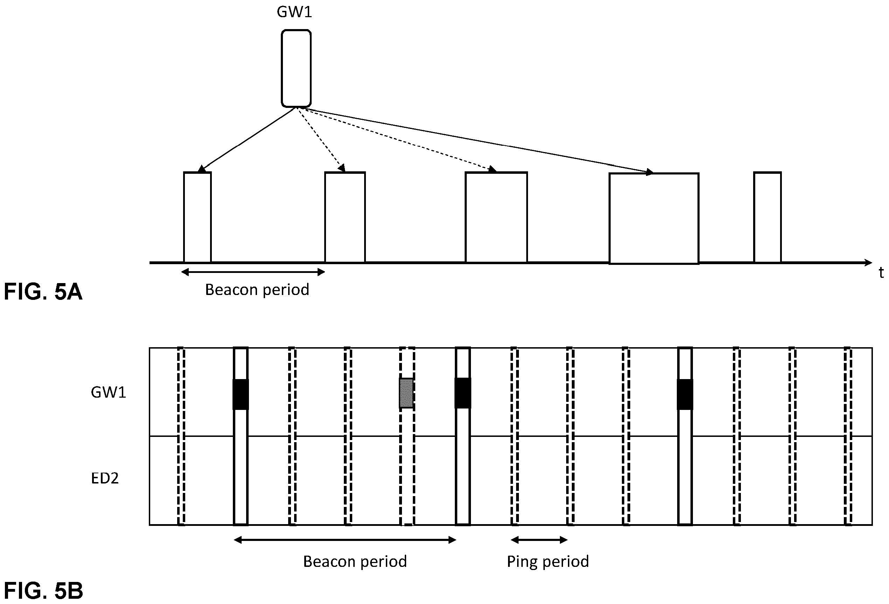

FIG. 5A is a schematic illustration of transmissions between gateway devices GW1-GW4 and end devices ED1-ED6 in the system of FIG. 4. In particular, transmissions between end device ED2 and the gateway devices GW1, GW2 and GW3 are shown.

End device ED2 opens reception windows (time slots) to receive beacon signals at periodic time intervals, indicated as the beacon period in FIG. 5A. In a typical LoRaWAN network, the beacon period may be 128 seconds. When the end device receives a beacon packet, it keeps the reception window open until the complete packet P is received. When a beacon signal is not received by the end device ED2 when a reception window opens (shown by the dashed arrows in FIG. 5A), the end device ED2 widens the reception window gradually as shown in FIG. 5A but can still receive beacon signals by using its internal clock. The end device ED2 may continue to widen the reception window for a particular time period, e.g. 2 hours, until Class B operation is released and the device falls back to Class A operation. Obviously, widening of the reception windows is disadvantageous for the end device ED2 because of associated increase of energy consumption. After a beacon signal is received again, the reception window size is decreased to the original size again.

In Class B mode, in addition to the reception windows for beacon signals for synchronization purposes with transmissions from the application servers, the end devices ED1-ED6 open ping slots to allow data transmissions from the servers to the end devices ED1-ED6 as shown in FIG. 5B These ping slots should be synchronized with the downlink transmissions and for that reason the beacon signals are transmitted from the gateways.

Beacon signals are time-synchronized packets transmitted by gateway devices and received by the end devices every beacon-period of 128 seconds, on the G3 sub-band by default. As synchronization is needed for Class B operation, an end-device is allowed to switch to Class B only after it searches and locks a beacon. To save energy of the end devices in the search, the LoRaWAN specification provides a DeviceTimeReq/Ans or BeaconTimingReq/Ans MAC command, depending on the LoRaWAN version, which speeds up the process of beacon search.

The received beacon packets contain a 17 byte payload comprising 4 bytes for GPS time, 7 bytes for gateway-specific information and 4 bytes for CRC (2 bytes for the GPS time and 2 bytes for the gateway-specific information).

Figure 5B depicts the beacon packet (black rectangle) as defined in the LoRaWAN specification received from a gateway device GW1-GW4 by an end device ED1-ED6. The time field contains the time elapsed in seconds since GPS epoch, the gateway specific information generally contains information that corresponds to the GPS coordinates of the transmitter antenna. Separating the CRC for the GPS time and the gateway-specific information allows synchronization with the gateway devices in conditions where the gateway device specific information field is corrupted, by decoding the GPS time separately. The end device ED1-ED6 also receives a data packet (grey rectangle) during a ping slot (the dashed windows) during which reception the ping slot is kept open. At some time instances, not shown, the end device ED1-ED6 may also transmit a data packet to a gateway device GW1-GW4.

The transmission parameters for a beacon signal may be: spreading factor SF=12, band width BW=125KHz, coding rate CR=4/5, packet size = 17 bytes, implicit-header mode, 10 preamble symbols and transmission power=17dBm (50mW). The airtime of a beacon signal is 1,220.61 ms.

In more detail, the following parameters are used for the simulation of the gateway devices GW1-GW4 and the end devices ED1-ED6. These parameters determine the energy consumption, transmission range and resilience to noise.

The spreading factor SF is taken to be SF=12, i.e. each symbol is sent with 4096 chips. The use of a high spreading factors makes symbol transmission more robust but provides for delay in the transmission of the symbol (i.e. increased airtime) and increased energy consumption.

The LoRaWAN regional specification for Europe, mentions that the LoRa transmissions in Europe are allowed on the frequencies in the 863 - 870 MHz bandwidth BW of the unlicensed spectrum. The frequencies in this band are further subdivided into sub-bands. The use of frequencies in the unlicensed spectrum is controlled via duty cycle constraints for each sub-band. For example, the G sub-band has a duty cycle constraint of 1%. This means that when a gateway device GW1-GW4 or an end device ED1-ED6 transmits on any frequency from this sub-band, it has to refrain from transmitting on any frequency from the same sub-band for 99% of the time on air of the transmission. In the simulation model, when an end device ED1-ED6 has to send an uplink, a random frequency from the allowed band is chosen for transmission, provided the duty cycle constraint of the sub-band in which the frequency falls is not violated. Both beacon and data (ping) transmissions are on 869.525MHz carrier.

A wider band of frequencies can carry more data and hence allow higher data rates, but lower sensitivity at the receiver. Gateway devices and end devices operate on bandwidths 125KHz, 250KHz and 500KHz. For simulations, the bandwidth is randomly selected from among these whenever an end device has to send an uplink. Beacon and ping transmissions use 125KHz BW.

The coding rate CR relates to the Forward Error Correction(FEC) rate used by a gateway device or end device for protection against transmission channel distortions. CR for LoRa transmissions can be set to either 4/5, 4/6, 4/7 or 4/8. A higher code rate, for example 4/8 means that for every 4 bits, there are 4 extra redundant bits which are transmitted for correct decoding at the receiver. This offers more protection but increases time on air. To model a random and close to reality situation of a LoRaWAN network, CR are also selected randomly when an end device has to send an uplink. CR=4/5 is used for beacons and pings.

The transmission power of a gateway device or end device is configured in the range of 2dBm to 20dBm. Furthermore, power levels higher than 17dBm can only be used in sub-bands with 1% duty cycle. For the simulations, transmission power of an end device is fixed to 14dBm. This is a typical value used by most LoRa end devices as obtained. For the downlinks, the gateway devices transmit at 17dBm.

The airtime of a transmission is the time needed for transmitting a frame from a gateway device to an end device or vice versa. The air time depends on the payload size, the SF, CR and BW. The total airtime of a transmission is the airtime required for transmission of the preamble (header) and for transmission of the payload. In the simulation model, the airtime for each uplink and downlink transmission is calculated to determine the reception time instant of the packet and calculate the Time off period for the gateway device or end device on the sub-band whose frequency was used for transmission. The Time off period depends on the duty cycle constraint on the sub-band. When a gateway device or an end device are in a Time Off period for a sub-band, it cannot transmit on a frequency falling in that sub-band.

Multicast is a communication technique which can be used to simultaneously deliver a packet to multiple destinations. Thus, multicasting requires aligning targeted end devices ED1-ED6 to listen at the same time as well as share the keys and addresses required to receive a broadcast packet. In LoRaWAN, such synchronized listening can be accomplished either via Class C or Class B operation because only these classes allow time-constrained and server-initiated downlinks. In order to achieve multicast in LoRaWAN Class B, all the end devices ED in a multicast-group should listen and decode the multicast transmissions at the same time. This is achieved by configuring the end devices ED1-ED6 in a multicast group with the same SF, channel, bandwidth, and ping-slot periodicity for reception. In addition, the end devices ED1-ED6 should have a common device address called multicast address and optionally common security keys, e.g. to decrypt a multicast message.

Synchronization of reception window openings at the end devices ED1-ED6 is achieved using beacons. For this purpose, beacon signals from gateway devices GW1-GW4 are synchronous. This ensures that beacon transmissions from multiple gateways GW1-GW4 would not interfere at the end devices ED1-ED6 resulting in a collision and hence a missed beacon. Thus, to participate in the broadcasting of a Class B beacon, the gateway devices GW1-GW4 are synchronised with an accuracy of e.g. less than 1 micro-second. With a high synchronization accuracy, there is a high probability that the beacon transmission from different gateway devices GW1-GW4 reaching a device's antenna look like multiple reflections of the same signal and do not destructively interfere with each other. However, since wireless channels are unpredictable by definition, it cannot be ensured that a synchronous beacon transmission from gateway devices GW1-GW4 would not result in a collision at the end devices ED1-ED6. Furthermore, the class B operation for the end devices ED1-ED6 may require the gateway devices GW1-GW4 to be synchronised with the network server with an accuracy of less than 1 millisecond to be able to transmit a class B downlink.

An end device ED1-ED6 may receive two or more beacon signals with a time offset and equivalent power. Such an offset may result from transmission offsets at the gateway devices GW1-GW4 larger than 1 microsecond or from channel variations. The beacon signals may interfere destructively as a result of time differences and hence result in a demodulation error at the end device ED1-ED6. In this case, the beacon signal is not received at the end device ED1-ED6. This happens systematically for every beacon until the end device ED1-ED6 moves.

In order to appropriately appreciate the collision effect, the capture effect has been taken into account. The capture effect is relevant for frequency modulated signals, and hence also for LoRa transmissions. This effect allows a packet that is received with a higher power level (e.g. at least 6dB stronger) still to be decoded in case of a collision. Hence, due the capture effect, relevant collisions only happen for end devices ED1-ED6 that receive beacon signals from two or more gateway devices GW1-GW4 at nearly equivalent power level. An end device ED1-ED6 would be able to decode a beacon signal if there is one gateway device GW1-GW4 from which the beacon signal is higher by at least 6 dBm as compared to beacon signals reaching the end device ED1-ED6 from all other gateway devices GW1-GW4.

For planning beacon transmission from gateway devices GW1-GW4, one approach would be to not activate all gateway devices GW1-GW4 for transmitting beacon signals in each beacon period. A gateway device GW1-GW4 may not participate in a beacon broadcast round systematically, but only with a probability P<1. This probability can be set in each gateway device GW1-GW4 or may be controlled from an external source, e.g. from the network server 44 in FIG. 4. The more gateway devices GW1-GW4 are deployed in a particular area, the smaller probability P should be. The decision of beacon transmission in a given broadcast round may be taken locally by each gateway device GW1-GW4 by generating a random number and comparing it to the set probability P. Correct Class B operation only requires 10% of beacons to be demodulated by the end device ED1-ED6. With a beacon randomization algorithm, the probability of beacon collision at an end device ED1-ED6 decreases considerably as compared to the scenario where all gateway devices GW1-GW4 transmit beacon signals in every beacon transmission round.

In addition to the adverse effect on class B operation and energy consumption at the end device ED1-ED6, collisions of beacon signals result in energy and airtime loss for the network operator.

With beacon randomization, there is also a chance that none of the gateway devices GW1-GW4, from which a device could receive a beacon signal (based on the relative location in the network) transmit a beacon signal in a beacon broadcast round. In that case, the network operator saves energy and gateway airtime. Even though, LoRaWAN specifies a beaconless operation for up to 120 minutes, losing beacons is energy expensive for the end-devices. Thus, there is a need to strike a trade-off between beacon collisions and no beacon transmission. Moreover, the stochastic behaviour of beacon randomization algorithm might provide sub-optimal solutions for beacon planning in LoRaWAN.

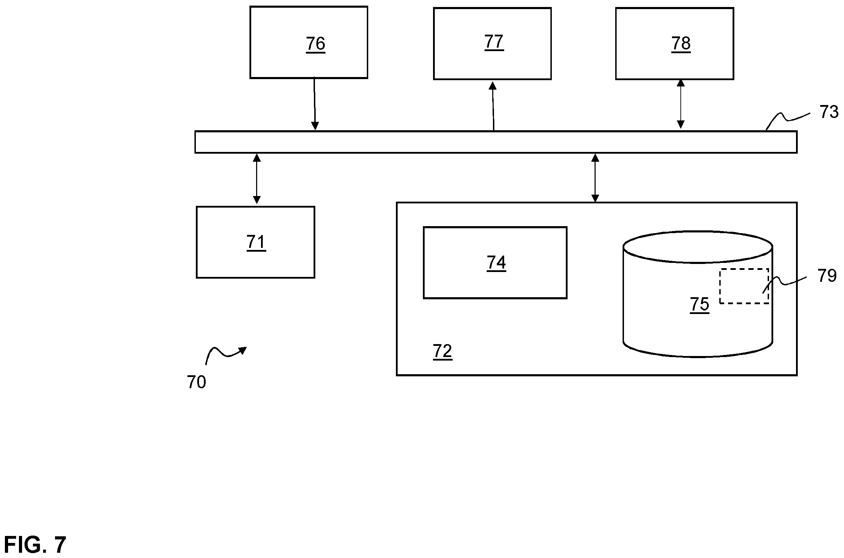

A LoraWAN Class B environment can be defined as an interaction of various discrete event processes including uplink transmissions, periodic downlink beacon transmissions, downlink data (ping) transmissions, downlink ACKs, MAC transmissions, re-transmissions and Class B ping-slot openings. A practical simulator has been developed using SimPy, which is based on Python. The simulator models the interaction of processes relevant for a LoRaWAN Class B environment. The simulations are performed using a computer as described in further detail with reference to FIG. 7.

Processes which have been modelled for the purpose of the simulations will now be described in further detail.

An uplink process has been modelled that runs for every end device ED1-ED6 in the network 40, wherein an assumption is made that transmissions by an end device ED1-ED6 are Poisson distributed and wherein inter-arrival times are exponentially distributed with an average period set randomly as 100 +(10 to 100) seconds for each end device ED1-ED6. Transmissions from the end devices ED1-ED6 to the gateway devices GW1-GW4 are determined in this manner.

A process of acknowledgements and retransmissions from end devices ED1-ED6 has been modelled as well. This process is initialised for every end device ED1-ED6 at the start of the simulation. If an end device sends an uplink transmission that should be confirmed, the end device expects to receive an acknowledgement back from the network server 44. If the transmission reached the network server 44 successfully and the 'best' gateway device GW1-GW4 selected by the network server 44 is not in its Off period, a downlink acknowledgement is sent on RX1. Reception by the end device ED1-ED6 on RX1 is with the same transmission parameters (SF, BW, channel, CR) as the uplink transmission. It is assumed that if the network server 44 sends an acknowledgement to the end device ED1-ED6, that the acknowledgement is successfully received at the requesting end device ED1-ED6. Network server 44 may fail to send an acknowledgement to the end device ED1-ED6 because the uplink transmission from an end device ED1-ED6 did not reach the network server 44 due to collisions at gateway devices GW1-GW4, because the signal strength to be received at any gateway device GW1-GW4 was insufficient or all reachable gateway devices GW1-GW4 were in transmission mode. It may also be that the best gateway device selected by the server for transmission of the acknowledgement to the end device is in an Off-period due to duty cycle restrictions. In the case when an acknowledgement has not been sent by the network server 44, the end-device re-transmits the data using SF=12, BW=125 KHz, CR=4/5 and a random channel other than the channel which was used for previous (re)transmission. SF12 is used for the retransmission to increase the probability of reception. In case of a retransmission, the server sends an acknowledgement on RX2 on the 869.525(G3) channel. A maximum of 7 retransmission attempts may be allowed after which the end device ED1-ED6 would send a new packet.

Yet another process that has been modelled is the downlink beacon process. This process is activated for all the gateway devices GW1-GW4 in the network 40. A Beacon Randomization Algorithm is implemented, wherein in each beacon period (i.e. after every 128 seconds), each gateway device GW1-GW4 decides whether to transmit a beacon signal in that beacon broadcast round or not, based on a globally set probability P. Probability P may also be set for each gateway device individually. If the gateway device GW1-GW4 decides to participate in a beacon broadcast round and provided it is not its Off period' due to duty cycle limitations, the gateway device GW1-GW4 transmits a beacon signal. Then, the "timeOff" for the gateway device GW1-GW4 is reset for future transmissions to account for duty cycle limitations on G3 subband. The beacon process for the Dynamic Region Formation (DRF) Algorithm according to the present disclosure will be described in further detail below.

Still another modelled process is the downlink ping process. The application layer of an end device ED1-ED6 initiates a request to switch to class B which makes the MAC layer to search for a beacon signal from a gateway device. Once the end device has locked to a beacon signal, the end device ED1-ED6 may successfully start class B operation by opening ping slots to receive a potential downlink from the network server 44. Protocol details are specified in the LoRaWAN specification. The ping process is activated for each end device ED1-ED6. If the end device is in Class B operation, the server uses a certain percentage of the ping slots (can be set for simulation) to send pings via the best gateway device GW1-GW4 which is decided on the basis of the latest uplink transmission by this end device ED1-ED6.

Yet another process included in the model is a beacon collision process. This process is activated for each end device ED1-ED6 at the start of the simulation. The process checks every beacon period of 128 seconds if a beacon signal is received at the end device ED1-ED6 or not. As already mentioned above, in a given beacon broadcast round, an end device ED1-ED6 may receive beacon signals from multiple gateway devices with equivalent power, resulting in a collision. On the other hand, it might be that none of the gateway devices GW1-GW4 in the vicinity of the end device ED1-ED6 participates in a given broadcast round so that the end device ED1-ED6 would not receive any beacon signal in the beacon broadcast round.

A LoRaWAN network was simulated for an area containing 60 gateway devices GW from which the coordinates were known. The network has been assumed to contain 20, 50 and 100 end devices ED that were stationary and uniformly distributed over the area.

The inventor has found that mere randomization of beacon signal transmissions from gateway devices is suboptimal and the further optimization can be obtained using the method as described with reference to FIGS. 1-3 in general for a LoRaWAN network as will now be explained in more detail.

In particular, at least one gateway device from the plurality of gateway devices GW1-GW4 in the network 40 is first selected as a beacon transmitting gateway device, e.g. gateway devices GW1 and GW3. Starting from the selected beacon transmitting gateway device GW1, one or more neighbor gateway devices, e.g. gateway devices GW2 and GW4, may be determined that are located within a distance from the selected beacon transmitting gateway devices GW1 and GW3, i.e. gateway devices that are close to the selected beacon transmitting devices GW1 and GW3. The distance may be a predetermined distance. The distance may be selected on the basis of the downlink transmission range from the at least one beacon transmitting gateway devices GW1 and GW3 and a safety margin may be applied to substantially guarantee that downlink transmissions from the beacon transmitting gateway devices GW1 and GW3 are received by end devices. In one embodiment, the distance may be less than 20 kilometers, preferably less than 10 kilometers, e.g. 7.5 kilometers. The next determination step includes the deactivation with respect to transmitting beacon signals for the neighbor gateway devices GW2 and GW4.

More particularly, in order to achieve efficient yet effective planning of beacon transmission from gateway devices, gateway devices are identified that a placed closely together in the network. By activating only one of the gateway devices placed closely in a group, efficiency is achieved. For example, in a realistic urban scenario, the assumption is that the beacon transmission by a gateway device at 50 milli Watts can be received with sufficient power by the end devices located in a radius of around 10 kms around the gateway device. Thus, it is a waste of energy and airtime for the gateway devices lying in the same radius of this gateway device to transmit the beacon signal. This is because, the end devices in the vicinity are already covered for beacon reception by the single gateway device with a high probability. Moreover, simultaneous transmission of beacon signals by closely placed gateway devices in a given beacon broadcast round increases the probability of beacon collision at the end devices in the range of these gateway devices.

For the disclosed dynamic region formation approach, a gateway device is randomly selected and activated for beacon signal transmission. In addition, a random probability $0.5 < P < 1$ is also set for each gateway device to avoid systematic collisions. The gateway devices in the vicinity , defined as a radius of 7.5 kilometer around the selected gateway device are identified and deactivated for beacon transmission. The process is repeated for the remaining gateway devices in the network. As the algorithm runs (for simulation purposes), it marks a gateway 'Activated' when it is selected for beacon transmission. Then, it identifies the gateway devices within the radius of 7.5 kilometers of this activated gateway devices and marks them as 'de-activated'. The algorithm then continues its search to locate the gateway devices which are neither activated nor deactivated to continue the process. This way, it is ensured the gateway devices in the area of interest are covered. The radius of 7.5 kilometers around the selected gateway device for beacon transmission is chosen to take account of practical communication range of LoRa transmissions (downlink) in urban and indoor environments. A larger radius is not taken to avoid outages. A signal outage occurs when an end device does not receive beacons from an activated gateway because of high signal attenuation due to large distance. This radius is constant for all the gateways, assuming the gateway devices are identical in terms of communication range. However, the communication range of a gateway device may vary depending on antenna configuration (e.g. omnidirectional or sectorised) and location of the gateway (indoor, outdoor, urban, forest). Hence, the radius can be customized for each gateway device to choose e.g. a larger radius for long communication range and a shorter radius for short range. The radius can be determined by the possible range of the selected gateway devices and may be preset for each gateway device before executing the simulation. Non-circular areas around the selected gateway device may also be applied to identify neighbor gateway devices that should be deactivated for beacon signal transmissions.

Determination of a gateway beacon transmission scheme may now be performed by executing a network performance function for the obtained system of the beacon transmitting gateway devices GW1 and GW3 and deactivated gateway devices GW2 and GW4. Once the network performance function has been executed, a new permutation of selected beacon transmitting gateway devices and deactivated gateway devices may be tested in order to determine the gateway beacon transmission scheme. In one example, one or more neighbor gateway devices GW2 and GW4 may now be selected as beacon transmitting gateway devices and one or more previously selected beacon transmitting gateway devices GW1 and GW3 may now be deactivated neighbor gateway devices. Repeatedly selecting beacon transmitting gateway devices and deactivating other gateway devices that are close to the selected beacon transmitting gateway device(s), provides for the dynamic formation of regions from each of which regions only one gateway device is selected to transmit beacon signals for end devices ED1-ED6. Results of the network performance functions can be analyzed to select an appropriate gateway beacon transmission scheme.

In one embodiment, the network performance function may be executed for a network 40 with the selected beacon transmission gateway devices GW1 and GW3 and the neighbor gateway devices GW2 and GW4 for which the beacon transmission is deactivated to obtain a first network performance result. As a next step, at least one beacon transmitting gateway device may be selected that is different from the at least one beacon transmitting gateway device selected for obtaining the first network performance result, e.g. gateway device GW2. For the new system, the network performance function may be executed to obtain a second network performance result. The gateway beacon transmission scheme of beacon transmitting gateway devices in the system may be determined based on a comparison of at least the first network performance result and the second network performance result. In one embodiment, the gateway beacon transmission scheme resulting in the best network performance result from the obtain network performance results is determined to be the most appropriate system. It should be appreciated that alternative ways may be applied to determine the optimal gateway beacon transmission scheme from one or more network performance functions or network performance results.

More particularly, during an exploration phase, a set of activated and deactivated gateway devices for beacon transmission is selected using the distance criterion as described above. The simulation may then be executed for a number of beacon broadcast rounds, such as 5 rounds. The number of beacon broadcast rounds can be predetermined, e.g. to achieve a significant number of rounds, but can also be determined in a dynamic manner, e.g. the simulation can be executed until a predetermined result of the network performance function is achieved or exceeded. The following network parameter may be calculated for the selected set

1. Total number (#) of beacon collision events at end devices ED
2. Total number (#) of 'no' beacon reception events at end devices ED
3. Total number (#) of beacon signals sent in the network
4. Maximum beacon-less operation time amongst all end devices in the period of 5 beacon rounds
5. Total number (#) of received beacons at the end devices ED

The network performance function may for example be defined as follows:

$$\text{Performance } (T) = w1 \times [\text{BeaconCollisions}] + w2 \times [\text{NoBeacons}] +$$

$$w3 \times [\text{NumberOfBeacons}] + w4 \times [\text{BeaconLessOperationPeriod}] + w5 \times [\text{NoOfReceivedBeacons}]$$

wherein w1 ,w2,w3 and w4 are weight coefficients reflecting penalties for the respective parameters, w5 is a weight coefficient reflecting a positive reward for the number of beacons received, and wherein T is the time period for which the simulation is run and performance is determined for a set n in FIG. 3. For example, T maybe set as 5 beacon rounds.

For example, since collisions may be considered the worst for network performance, w1 may be selected as a high negative weight, whereas, on the other hand, receiving beacons is rewarded with a high positive weight. For example, w1 may be set to -4, w2 to -3, w3 to -2, w4 to -5 and w5 to +5 for the simulation.

The network performance result for this set is stored. A new set of activated and deactivated gateway devices for beacon transmission is then selected and the network performance result may then be calculated after running the simulation for this new set for example another 5 rounds. The process may be repeated for a pre-defined 'exploration-Round' times. For example, the number of exploration rounds may be set to 150 beacon rounds. The set with the maximum reward as determined from the defined performance function is the solution set which is 'exploited' (used) for the rest of the time. The entire process is automatic. The optimization method is a simple implementation of learning and heuristics and is similar to the epsilon-greedy algorithm used in Reinforcement Learning.

The set of gateway devices activated for beacon transmission is pseudo-random and depends on the first gateway device which is randomly selected for beacon transmission. The number of possible sets of gateways which can be activated may therefore be high. The solution of the problem can be defined as a tuple with each element being a (gatewayID, Pbeacon) pair, wherein Pbeacon is the probability that the gateway device transmits a beacon signal. In order to avoid long simulation times, a time constraint can be applied dependent on the available time and the processing power of the computer system. The optimal solution is the solution obtained within the available time.

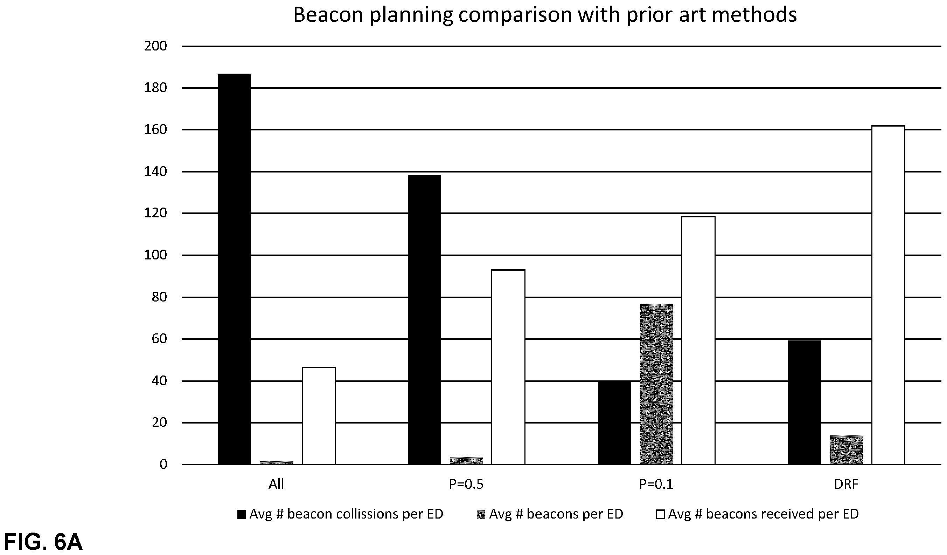

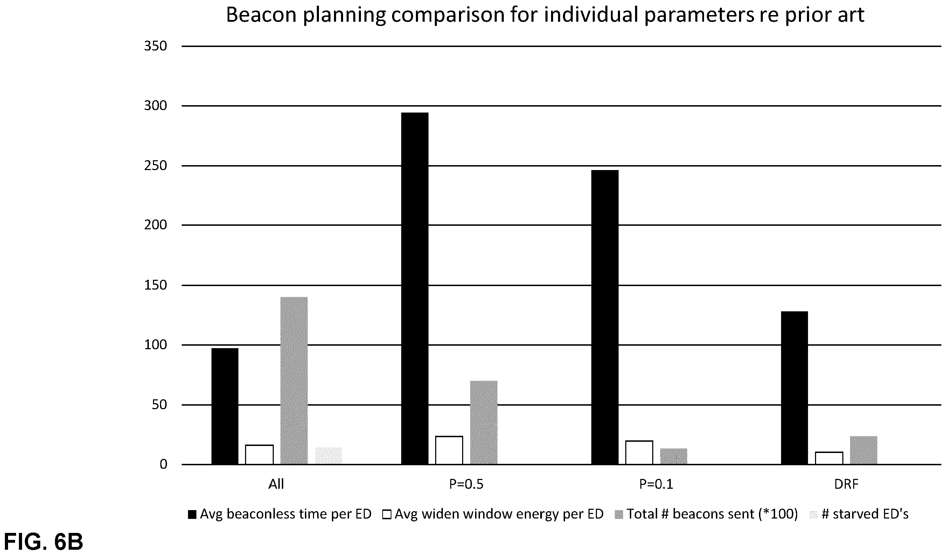

Figures 6A and 6B show the results of a comparative performance study of dynamic region formation according to the DRF method disclosed herein with prior art methods as randomization with all gateway devices transmitting beacons 50% (P=0.5) and 10% (P=0.1) of the times and No Planning (All gateways transmitting at all times). The simulations were run for 20 end devices ED for 235 beacon broadcast rounds with 60 gateway devices GW.

The numbers in the diagram of FIG. 6A are averaged over 20 end devices ED to illustrate the average case scenario for a single end device ED. FIG. 6A shows that when using no beacon planning (All), out of 235 beacon broadcast rounds, in 187 rounds, the end device ED experienced beacon collisions, in 2 beacon rounds, the beacon signal did not reach the end device ED and in only 46 rounds a beacon signal was received at the end device ED. Using beacon randomization with the gateway devices transmitting for 50% of the time (P = 0:5), the number of rounds in which a beacon collision occurs at the end device ED decreases to 138 which is still high and in 93 rounds beacon signals are received by an end device ED. Decreasing the probability to 0.1, decreases the number of beacon collisions to 40 times out of 235 but at the same time the number of beacon broadcast rounds in which no beacon is received increases to 77 rounds and hence only in 118 rounds out of 235 beacon signal reach the end device ED.

When using the disclosed DRF method, a trade-off is found to exist between the number of no beacon signal received and beacon collisions, so that the number of rounds in which beacon signals are received at the end device ED is increased to 162.

FIG. 6B is a comparison of the following aspects: average beaconless times per end device ED (black bars); average widening of reception window energy (times 100) per end device ED (white bars); total number (#) of beacon signals sent (times 100) per end device ED (dark gray bars) and the total number (#) of starved end devices ED (light gray bar).

The beacon-less operation time is the average time period (in minutes) per end device ED for which this end device did not receive any beacon signal from any gateway device GW. It is noted that this period is accumulated over 235 beacon broadcast rounds. It can be observed that it is the highest for beacon randomization since, all the end devices ED miss beacon signals frequently but only for short periods. Hence there are no end devices ED which did not receive any beacon at all. That is, no starvation was observed during simulation in case of randomization. It is worth mentioning that none of the end devices ED miss beacon signals for more than 60 minutes at a stretch. Hence no end device ED had to switch back to Class A operation when using beacon signal randomization with P=0.5 or P=0.1. On the other hand, when using no beacon planning (All), 15 out of 20 end devices ED never received a beacon signal hence could not operate in Class B mode. The average beacon-less period is less than the randomization case, because, the remaining end devices receive beacon signals in almost every beacon round. Thus, the simulations show that the end devices ED in a 'bad' location will face systematic collisions and will be deprived of beacon signals at all times, while end devices in a 'good' location will always receive the beacon signals. The disclosed DRF method performs the best. The DRF method ensures that all end devices ED continue their operation in Class B and miss only a few beacon signals. Hence, beaconless operation time per end device ED is acceptably less and there are no starved end devices ED.

When considering the energy overhead at the end device, every time a beacon signal is missed, the end device ED widens its ping and beacon reception windows to accommodate any clock drifts as was shown in FIG. 5A. This results in an energy overhead at the end device ED. It can be seen from FIG. 6A that the disclosed DRF method performs the best with the least energy overhead of just 1024 mJ on an average per end device ED, which is 56% less than beacon randomization.

Considering the total number of beacons sent within the network, it is noted that beacon signals consume a lot of gateway airtime and downlink energy. Hence, beacon signal transmission is expensive for the network operator. It is observed from FIG. 6B that with the disclosed DRF method, the number of beacons transmitted in the network in 235 broadcast rounds is just 2365 which is 83% less than when using no beacon planning (All) and 66% less than when using randomization.

Finally, an important aspect for low power wide area network technologies is to enable scaling of the network to accommodate increasing number of end devices ED. In case of LoRaWAN Class B, in order to accommodate more end devices or multicast groups, it needs to be ensured that the same number of gateway devices can handle increased downlink ping requirements. Scalability was studied through simulations. From the network server's perspective (downlink), scaling of the network, that is increasing the number of end-devices (or multicast groups) can be considered equivalent to increasing the number of data (ping) slots that are used for downlink pings keeping the number of end devices constant. Hence, the percentage of ping slots being used for downlink pings was increased to study scalability and following was observed:

a) With no beacon planning: the percentage of ping slots used at all
end devices increases from 10% to 50%, the percentage of delayed pings increases from 11% to 50%.
b) With randomization (P = 0.5): an increase of the percentage of ping slots used at all end devices from 9% to 30%
c) With DRF method: an increase of the percentage of ping slots used at all end devices from 11% to 22%

The scalability is enabled by giving less airtime to gateway devices to beacon signal transmissions, hence allowing more pings to be accommodated. By comparison of the number in terms of energy consumed, number of collisions, etc, it can be observed that DRF provides good performance, while also enabling scaling of the network.

Figure 7 depicts a block diagram illustrating an exemplary processing system according to an embodiment. As shown in figure 7, the processing system 70 may include at least one processor 71 coupled to memory elements 72 through a system bus 73. As such, the processing system may store program code within memory elements 72. Further, the processor 71 may execute the program code accessed from the memory elements 72 via a system bus 73. In one aspect, the processing system may be implemented as a computer that is suitable for storing and/or executing program code. It should be appreciated, however, that the processing system 70 may be implemented in the form of any system including a processor and a memory that is capable of performing the functions described within this specification.

The memory elements 72 may include one or more physical memory devices such as, for example, local memory 74 and one or more bulk storage devices 75. The local memory may refer to random access memory or other non-persistent memory device(s) generally used during actual execution of the program code. A bulk storage device may be implemented as a hard drive or other persistent data storage device. The processing system 70 may also include one or more cache memories (not shown) that provide temporary storage of at least some program code in order to reduce the number of times program code must be retrieved from the bulk storage device 610 during execution.

Input/output (I/O) devices depicted as an input device 76 and an output device 77 optionally can be coupled to the processing system. Examples of input devices may include, but are not limited to, a space access keyboard, a pointing device such as a mouse, or the like. Examples of output devices may include, but are not limited to, a monitor or a display, speakers, or the like. Input and/or output devices may be coupled to the processing system either directly or through intervening I/O controllers.

In an embodiment, the input and the output devices may be implemented as a combined input/output device. An example of such a combined device is a touch sensitive display, also sometimes referred to as a "touch screen display" or simply "touch screen". In such an embodiment, input to the device may be provided by a movement of a physical object, such as e.g. a stylus or a finger of a person, on or near the touch screen display.

A network adapter 78 may also be coupled to the processing system to enable it to become coupled to other systems, computer systems, remote network devices, and/or remote storage devices through intervening private or public networks. The network adapter may comprise a data receiver for receiving data that is transmitted by said systems, devices and/or networks to the processing system 70, and a data transmitter for transmitting data from the processing system 70 to said systems, devices and/or networks. Modems, cable modems, and Ethernet cards are examples of different types of network adapter that may be used with the processing system 70.

As pictured in figure 7, the memory elements 72 may store an application 79. In various embodiments, the application 79 may be stored in the local memory 74, the one or more bulk storage devices 75, or apart from the local memory and the bulk storage devices. It should be appreciated that the processing system 70 may further execute an operating system (not shown in figure 7) that can facilitate execution of the application 79. The application 79, being implemented in the form of executable program code, can be executed by the processing system 70, e.g., by the processor 71. Responsive to executing the application, the processing system 70 may be configured to perform one or more operations or method steps described herein, such as performing the simulation method described above or to control beacon transmission in a low power wide area network using the simulation method.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 71 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the claims. The embodiments were chosen and described in order to best explain the principles and some practical applications of the present invention, and to enable others of ordinary skill in the art to understand the present invention for various embodiments with various modifications as are suited to the particular use contemplated.

**Claims**

1. A computer-implemented method for determining a gateway beacon transmission scheme in a low power wide area network comprising a plurality of gateway devices and a plurality of end devices, wherein each of the end devices is configured for wirelessly receiving a beacon signal from one or more of the gateway devices in the network for synchronizing time windows of the end devices for data reception from the gateway devices, the method comprising the steps of:

   a) selecting (31) at least one gateway device from the plurality of gateway devices in the network as a beacon transmitting gateway device;

   **characterized by** further comprising the steps of:

   b) determining (32) one or more neighbor gateway devices within a distance from the at least one selected beacon transmitting gateway device;
   c) deactivating beacon transmission for the determined neighbor gateway devices;
   d) executing (33) a network performance function for a network with the at least one selected beacon transmitting gateway device and the neighbor devices for which the beacon transmission is deactivated to obtain (34) a first network performance result;
   e) selecting (35) at least one gateway device that is different from the at least one beacon transmitting gateway device selected in step a);
   f) executing steps b) - d) with the at least one beacon transmitting gateway device selected in step e) to obtain a second network performance result;
   g) determining (36) a gateway beacon transmission scheme of beacon transmitting gateway devices based on a comparison of at least the first network performance result and the second network performance result.

2. The method according to claim 1, wherein the beacon transmitting gateway devices are determined to transmit beacon signals at predetermined times and the beacon transmitting gateway devices are associated with a probability P< 1 of transmitting the beacon signal at the predetermined times, preferably 0.5<P<1.

3. The method according to claim 1 or 2, wherein the selected beacon transmitting gateway devices are determined to transmit beacon signals or not for a particular beacon round and the network performance function is executed for at least two of said beacon rounds.

4. The method according to one or more of the preceding claims wherein the distance for determining the neighbor gateway devices is customizable per selected beacon transmitting gateway device.

5. The method according to one or more of the preceding claims, wherein the execution of the network performance function includes a simulation process of a beacon transmission process in the network with the selected beacon transmitting gateway devices and the deactivated neighbor devices, wherein the simulation process entails one or more of the following sub-processes:

   - downlink data receiving by the end devices;
   - beacon collision at the end devices;
   - duty cycle limitations for the gateway devices and/or the end devices.

6. The method according to one or more of the preceding claims, wherein the network performance function contains components associated with at least one of:

   - beaconless operation period for the end devices; and
   - the number of beacons received by the end devices from the selected gateway devices.

7. The method according to one or more of the preceding claims, wherein the network performance function contains components associated with at least one of:

   - total number of beacon signal collisions at the end devices;
   - total number of no beacon signals received at the end devices; and
   - total number of beacon signals sent in the network.

8. The method according to one or more of the preceding claims, wherein:

   - the low power wide area network is a LoRaWAN network in accordance with the LoRaWAN specification, e.g. the LoRaWAN 1.0.3 specification of July 2018; and/or
   - one or more of the end devices are operating as Class B LoRaWAN devices.

9. The method according to one or more of the preceding claims, further comprising the step of controlling the network to implement the gateway beacon transmission scheme determined in accordance with step g).

10. A computer program product for determining a gateway beacon transmission scheme in a low range wide area network comprising a plurality of gateway devices and a plurality of end devices, the product comprising one or more code portions configured to cause a computer system, when running the product, to perform the steps of:

   a) selecting at least one gateway device from the plurality of gateway devices in the network as a beacon transmitting gateway device;

   **characterized by** the further steps of:

   b) determining one or more neighbor gateway devices within a distance from the at least one selected beacon transmitting gateway device;
   c) deactivating beacon transmission for the determined neighbor gateway devices;
   d) executing a network performance function for a network with the at least one selected beacon transmitting gateway device and the neighbor devices for which the beacon transmission is deactivated to obtain a first network performance result;
   e) selecting at least one gateway device that is different from the at least one beacon transmitting gateway device selected in step a);
   f) executing steps b) - d) with the at least one beacon transmitting gateway device selected in step e) to obtain a second network performance result;
   g) determining a gateway beacon transmission scheme of beacon transmitting gateway devices based on a comparison of at least the first network performance result and the second network performance result.

**11.** The computer program product according to claim 10, wherein the computer program product further comprises code portions configured to cause the computer system, when running the product, to perform the steps of the computer-implemented method according to one or more of the claims 2-9.

**Patentansprüche**

**1.** Computerimplementiertes Verfahren zur Bestimmung eines Gateway-Baken-Übertragungsschemas in einem Weitbereichsnetzwerk mit niedriger Leistungsaufnahme, das eine Vielzahl von Gateway-Geräten und eine Vielzahl von Endgeräten umfasst, wobei jedes der Endgeräte ausgebildet ist zum drahtlosen Empfangen eines Baken-Signals von einem oder mehreren der Gateway-Geräte in dem Netzwerk zum Synchronisieren von Zeitfenstern der Endgeräte für den Datenempfang von den Gateway-Geräten, wobei das Verfahren die Schritte umfasst:

a) Auswählen (31) mindestens eines Gateway-Geräts aus der Vielzahl von Gateway-Geräten in dem Netzwerk als Baken-übertragendes Gateway-Gerät;

**dadurch gekennzeichnet, dass** es ferner die Schritte umfasst:

b) Bestimmen (32) eines oder mehrerer Nachbar-Gateway-Geräte innerhalb einer Entfernung von dem mindestens einen ausgewählten Baken-übertragenden Gateway-Gerät;
c) Deaktivieren der Baken-Übertragung für die bestimmten Nachbar-Gateway-Geräte;
d) Ausführen (33) einer Netzwerkleistungsfunktion für ein Netzwerk mit dem mindestens einen ausgewählten Baken-übertragenden Gateway-Gerät und den Nachbargeräten, für die die Baken-Übertragung deaktiviert ist, um ein erstes Netzwerkleistungsergebnis zu erhalten (34);
e) Auswählen (35) mindestens eines Gateway-Geräts, das sich von dem mindestens einen in Schritt a) ausgewählten Baken-übertragenden Gateway-Gerät unterscheidet;
f) Ausführen der Schritte b)-d) mit dem mindestens einen in Schritt e) ausgewählten Baken-übertragenden Gateway-Gerät, um ein zweites Netzwerkleistungsergebnis zu erhalten;
g) Bestimmen (36) eines Gateway-Baken-Übertragungsschemas von Baken-übertragenden Gateway-Geräten basierend auf einem Vergleich zumindest des ersten Netzwerkleistungsergebnisses und des zweiten Netzwerkleistungsergebnisses.

**2.** Verfahren nach Anspruch 1, wobei die Baken-übertragenden Gateway-Geräte dazu bestimmt werden, Baken-Signale zu vorbestimmten Zeiten zu übertragen und den Baken-übertragenden Gateway-Geräten eine Wahrscheinlichkeit P < 1, das Baken-Signal zu den vorbestimmten Zeiten zu senden, zugeordnet ist, wobei vorzugsweise 0,5<P<1 ist.

**3.** Verfahren nach Anspruch 1 oder 2, wobei die ausgewählten Baken-übertragenden Gateway-Geräte dazu bestimmt werden, für eine bestimmte Baken-Runde Baken-Signale zu übertragen oder nicht, und die Netzwerkleistungsfunktion für mindestens zwei der Baken-Runden ausgeführt wird.

**4.** Verfahren nach einem oder mehreren der vorhergehenden Ansprüche, wobei die Entfernung zum Bestimmen der Nachbar-Gateway-Geräte für jedes ausgewählte Bakensendende Gateway-Gerät anpassbar ist.

**5.** Verfahren nach einem oder mehreren der vorhergehenden Ansprüche, wobei die Ausführung der Netzwerkleistungsfunktion einen Simulationsprozess eines Baken-Übertragungsprozesses im Netzwerk mit den ausgewählten Baken-übertragenden Gateway-Geräten und den deaktivierten Nachbargeräten aufweist, wobei der Simulationsprozess einen oder mehrere der folgenden Unterprozesse beinhaltet:

- Empfangen von Downlink-Daten durch die Endgeräte;
- Baken-Kollision an den Endgeräten;
- Einschaltdauerbeschränkungen für die Gateway-Geräte und/oder die Endgeräte.

**6.** Verfahren nach einem oder mehreren der vorhergehenden Ansprüche, wobei die Netzwerkleistungsfunktion Komponenten enthält, die mindestens zugeordnet sind zu:

- einer Baken-losen Betriebsdauer für die Endgeräte; und
- der Anzahl der Baken, die die Endgeräte von den ausgewählten Gateway-Geräten empfangen.

**7.** Verfahren nach einem oder mehreren der vorhergehenden Ansprüche, wobei die Netzwerkleistungsfunktion Komponenten enthält, die mindestens zugeordnet sind zu:

- einer Gesamtzahl von Baken-Signalkollisionen an den Endgeräten;
- einer Gesamtzahl von an den Endgeräten empfangenen Nicht-Baken-Signale; und
- einer Gesamtzahl von in dem Netzwerk übertragenen Baken-Signalen.

**8.** Verfahren nach einem oder mehreren der vorhergehenden Ansprüche, wobei:

- das Weitbereichsnetzwerk mit niedriger Leistungsaufnahme ein LoRaWAN-Netzwerk gemäß der LoRaWAN-Spezifikation ist, z.B. der LoRaWAN 1.0.3-Spezifikation vom Juli 2018; und/oder
- eines oder mehrere der Endgeräte als LoRaWAN-Geräte der Klasse B arbeiten.

**9.** Verfahren nach einem oder mehreren der vorhergehenden Ansprüche, ferner umfassend den Schritt des Steuerns des Netzwerks, um das gemäß Schritt g) bestimmte Gateway-Baken-Übertragungsschema zu implementieren.

**10.** Computerprogrammprodukt zur Bestimmung eines Gateway-Baken-Übertragungsschemas in einem Weitbereichsnetzwerk mit niedriger Leistungsaufnahme, das eine Vielzahl von Gateway-Geräten und eine Vielzahl von Endgeräten umfasst, wobei das Produkt einen oder mehrere Codeabschnitte umfasst, die dazu ausgebildet sind, ein Computersystem zu veranlassen, wenn es das Produkt ausführt, die folgenden Schritte durchzuführen:

a) Auswählen mindestens eines Gateway-Geräts aus der Vielzahl von Gateway-Geräten in dem Netzwerk als Baken-übertragendes Gateway-Gerät;

ferner **gekennzeichnet durch** die Schritte:

b) Bestimmen eines oder mehrerer Nachbar-Gateway-Geräte innerhalb einer Entfernung von dem mindestens einen ausgewählten Baken-übertragenden Gateway-Gerät;
c) Deaktivieren der Baken-Übertragung für die bestimmten Nachbar-Gateway-Geräte;
d) Ausführen einer Netzwerkleistungsfunktion für ein Netzwerk mit dem mindestens einen ausgewählten Baken-übertragenden Gateway-Gerät und den Nachbargeräten, für die die Baken-Übertragung deaktiviert ist, um ein erstes Netzwerkleistungsergebnis zu erhalten (34);
e) Auswählen mindestens eines Gateway-Geräts, das sich von dem mindestens einen in Schritt a) ausgewählten Baken-übertragenden Gateway-Gerät unterscheidet;
f) Ausführen der Schritte b)-d) mit dem mindestens einen in Schritt e) ausgewählten Baken-übertragenden Gateway-Gerät, um ein zweites Netzwerkleistungsergebnis zu erhalten;
g) Bestimmen eines Gateway-Baken-Übertragungsschemas von Baken-übertragenden Gateway-Geräten basierend auf einem Vergleich zumindest des ersten Netzwerkleistungsergebnisses und des zweiten Netzwerkleistungsergebnisses.

**11.** Computerprogrammprodukt nach Anspruch 10, wobei das Computerprogrammprodukt ferner Codeabschnitte umfasst, die dazu ausgebildet sind, das Computersystem zu veranlassen, wenn es das Produkt ausführt, die Schritte des computerimplementierten Verfahrens nach einem oder mehreren der Ansprüche 2-9 durchzuführen.

## Revendications

**1.** Procédé mis en œuvre par ordinateur pour déterminer un schéma de transmission de balise de passerelle dans un réseau étendu faible puissance comprenant une pluralité de dispositifs de passerelle et une pluralité de dispositifs terminaux, dans lequel chacun des dispositifs terminaux est configuré pour recevoir sans fil un signal de balise en provenance d'un ou de plusieurs des dispositifs de passerelle dans le réseau pour synchroniser des fenêtres temporelles des dispositifs terminaux pour une réception de données en provenance des dispositifs de passerelle, le procédé comprenant les étapes de :

a) sélection (31) d'au moins un dispositif de passerelle parmi la pluralité de dispositifs de passerelle dans le réseau en tant que dispositif de passerelle d'émission de balise ;

**caractérisé en ce qu'**il comprend en outre les étapes de :

b) détermination (32) d'un ou de plusieurs dispositifs de passerelle voisins à l'intérieur d'une distance par rapport à l'au moins un dispositif de passerelle d'émission de balise sélectionné ;

c) désactivation de l'émission de balise pour les dispositifs de passerelle voisins déterminés ;

d) exécution (33) d'une fonction de performance de réseau pour un réseau avec l'au moins un dispositif de passerelle d'émission de balise sélectionné et les dispositifs voisins pour lesquels l'émission de balise est désactivée pour obtenir (34) un premier résultat de performance de réseau ;

e) sélection (35) d'au moins un dispositif de passerelle qui est différent de l'au moins un dispositif de passerelle d'émission de balise sélectionné au niveau de l'étape a) ;

f) exécution des étapes b) à d) avec l'au moins un dispositif de passerelle d'émission de balise sélectionné au niveau de l'étape e) pour obtenir un second résultat de performance de réseau ; et

g) détermination (36) d'un schéma de transmission de balise de passerelle de dispositifs de passerelle d'émission de balise sur la base d'une comparaison d'au moins le premier résultat de performance de réseau et le second résultat de performance de réseau.

2. Procédé selon la revendication 1, dans lequel les dispositifs de passerelle d'émission de balise sont déterminés pour émettre des signaux de balise à des temps prédéterminés et les dispositifs de passerelle d'émission de balise sont associés à une probabilité P < 1 d'émission du signal de balise aux temps prédéterminés, de préférence 0,5 < P < 1.

3. Procédé selon la revendication 1 ou 2, dans lequel les dispositifs de passerelle d'émission de balise sélectionnés sont déterminés pour émettre des signaux de balise ou non pour un cycle de balise(s) particulier et la fonction de performance de réseau est exécutée pour au moins deux desdits cycles de balise(s).

4. Procédé selon une ou plusieurs des revendications précédentes, dans lequel la distance pour déterminer les dispositifs de passerelle voisins peut être personnalisée par dispositif de passerelle d'émission de balise sélectionné.

5. Procédé selon une ou plusieurs des revendications précédentes, dans lequel l'exécution de la fonction de performance de réseau inclut un processus de simulation d'un processus d'émission de balise dans le réseau avec les dispositifs de passerelle d'émission de balise sélectionnés et les dispositifs voisins désactivés, dans lequel le processus de simulation met en jeu un ou plusieurs des sous-processus suivants :

   - la réception de données de liaison descendante par les dispositifs terminaux ;
   - une collision de balise au niveau des dispositifs terminaux ; et
   - des limitations de rapport cyclique pour les dispositifs de passerelle et/ou les dispositifs terminaux.

6. Procédé selon une ou plusieurs des revendications précédentes, dans lequel la fonction de performance de réseau contient des composantes associées à au moins un élément parmi :

   - une période de fonctionnement sans balise pour les dispositifs terminaux ; et
   - le nombre de balises reçues par les dispositifs terminaux depuis les dispositifs de passerelle sélectionnés.

7. Procédé selon une ou plusieurs des revendications précédentes, dans lequel la fonction de performance de réseau contient des composantes associées à au moins un élément parmi :

   - le nombre total de collisions de signal de balise au niveau des dispositifs terminaux ;
   - le nombre total de non réceptions de signaux de balise au niveau des dispositifs terminaux ; et
   - le nombre total de signaux de balise envoyés dans le réseau.

8. Procédé selon une ou plusieurs des revendications précédentes, dans lequel :

   - le réseau étendu faible puissance est un réseau LoRaWAN conformément à la spécification LoRaWAN, par exemple la spécification LoRaWAN 1.0.3 de juillet 2018 ; et/ou
   - un ou plusieurs des dispositifs terminaux sont en train de fonctionner en tant que dispositifs LoRaWAN de Classe B.

9. Procédé selon une ou plusieurs des revendications précédentes, comprenant en outre l'étape de commande du réseau pour mettre en œuvre le schéma de transmission de balise de passerelle déterminé conformément à l'étape g).

**10.** Progiciel pour déterminer un schéma de transmission de balise de passerelle dans un réseau étendu faible puissance comprenant une pluralité de dispositifs de passerelle et une pluralité de dispositifs terminaux, le progiciel comprenant une ou plusieurs parties de code configurées pour forcer un système informatique, lorsqu'il exécute le progiciel, à réaliser les étapes de :

a) sélection d'au moins un dispositif de passerelle parmi la pluralité de dispositifs de passerelle dans le réseau en tant que dispositif de passerelle d'émission de balise ;

**caractérisé en ce qu'**il comprend en outre les étapes de :

b) détermination d'un ou de plusieurs dispositifs de passerelle voisins à l'intérieur d'une distance par rapport à l'au moins un dispositif de passerelle d'émission de balise sélectionné ;
c) désactivation de l'émission de balise pour les dispositifs de passerelle voisins déterminés ;
d) exécution d'une fonction de performance de réseau pour un réseau avec l'au moins un dispositif de passerelle d'émission de balise sélectionné et les dispositifs voisins pour lesquels l'émission de balise est désactivée pour obtenir un premier résultat de performance de réseau ;
e) sélection d'au moins un dispositif de passerelle qui est différent de l'au moins un dispositif de passerelle d'émission de balise sélectionné au niveau de l'étape a) ;
f) exécution des étapes b) à d) avec l'au moins un dispositif de passerelle d'émission de balise sélectionné au niveau de l'étape e) pour obtenir un second résultat de performance de réseau ; et
g) détermination d'un schéma de transmission de balise de passerelle de dispositifs de passerelle d'émission de balise sur la base d'une comparaison d'au moins le premier résultat de performance de réseau et le second résultat de performance de réseau.

**11.** Progiciel selon la revendication 10, dans lequel le progiciel comprend en outre des parties de code configurées pour forcer le système informatique, lorsqu'il exécute le progiciel, à réaliser les étapes du procédé mis en œuvre par informatique selon une ou plusieurs des revendications 2 à 9.

FIG. 1

FIG. 2A

FIG. 2B

FIG. 3

FIG. 4

**FIG. 5A**

Beacon period

GW1

t

**FIG. 5B**

GW1

ED2

Beacon period

Ping period

EP 3 840 454 B1

Beacon planning comparison with prior art methods

FIG. 6A

## Beacon planning comparison for individual parameters re prior art

Legend: ■ Avg beaconless time per ED  □ Avg widen window energy per ED  ▨ Total # beacons sent (*100)  ▨ # starved ED's

**FIG. 6B**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190053180 A1

**Non-patent literature cited in the description**

- Improving Reliability and Scalability of LoRaWANs Through Lightweight Scheduling. **REYNDERS BRECHT et al.** IEEE Internet of Things Journal. IEEE, 01 June 2018, vol. 5, 1830-1842

- Evaluating the Scalability of LoRa WanGateways for Class B Communication in ns-3. **FINNEGAN JOSEPH et al.** 2018 IEEE Conference on Standards for Communications and Networking (CSCN). IEEE, 29 October 2018, 1-6